# EUROPEAN PATENT APPLICATION

(11) **EP 3 553 763 A1**
(43) Date of publication of application: **16.10.2019**
(21) Application number: 19020130.1
(22) Date of filing: 15.03.2019
(51) Int. Cl.: G08G 5/00

(54) **AIRCRAFT POSITION COMMUNICATION SYSTEM**

(30) Priority: 15.03.2018 GB 201804199
(71) Applicant: Walton, Ian Martin, Tredington, Warwickshire CV36 4NG (GB)
(72) Inventor: Walton, Ian Martin, Tredington, Warwickshire CV36 4NG (GB)
(74) Representative: Ellis, Christopher Paul

(57) **Abstract**

An aircraft position communication system comprising a wireless communication device and a central server, the wireless communication device is operable to receive aircraft position data associated with a first aircraft from a global positioning system and transmit the aircraft position data to the central server via a mobile phone cell tower, and the central server is operable to store and process the aircraft position data transmitted from the wireless communication device and aircraft position data associated with a second aircraft, in which the central server is further operable to selectively transmit the aircraft position data associated with the second aircraft to the wireless communication device via a mobile cell tower, and alert the first aircraft to the position of the second aircraft if the second aircraft position is within a pre-determined range of the first aircraft position.

## Description

The present invention relates to a method for communicating aircraft position data and an aircraft position communication system, more specifically to a method and system which utilises a wireless communications device such as mobile phone, and an existing mobile cellular data network to alert a pilot to a possible collision with another aircraft.

With increasing numbers of aircraft in airspace, it is important that pilots of each of those aircraft have visibility of other nearby aircraft, and furthermore that air traffic control (ATC) also visibility of those aircraft such that they can interact with pilots of those aircraft in controlled airspace so as to reduce the risk of actual or near mid-air collisions between aircraft.

Historically, primary radar, and then secondary surveillance radar has been used to detect the presence of other aircraft. Primary radar is limited in that it relies on the material of the aircraft to enable detection of that aircraft, with aircraft made of plastic or wood difficult to identify by radar. Secondary surveillance radar relies on aircraft having a costly transponder installed. Both primary and second surveillance radar are not automatic in the sense that they rely on ATC communicating the position of other aircraft to pilots.

Automatic dependent surveillance-broadcast (ADS-B) is an alternative surveillance technology in which an aircraft determines its position via satellite navigation and periodically broadcasts that position to enable it to be tracked. This tracking information can be received by air traffic control as an alternative to secondary radar as no interrogation signal is needed from the ground. One limitation of ADS-B is that it is single frequency and has no time division multiplexing thereby limiting the number of communication channels. Another limitation of ADS-B is the small number of transmitting and receiving stations.

Modern commercial aircraft can use can use several types of collision avoidance systems to prevent unintentional contact with other aircraft, obstacles, or the ground.

One such system is a traffic collision avoidance system (TCAS) which relies on aircraft having a transponder which is expensive, and is primarily only used on commercial aircraft. The TCAS system will not be able to identify aircraft not having a transponder installed.

A particular problem exists in the lower airspace (below 10000 feet), where not only is the likelihood of a collision greater compared to in the upper airspace due to the density of aircraft, but the lower airspace contains large numbers of small aircraft without expensive transponder equipment on board. These small aircraft can therefore be difficult to detect by other aircraft, thereby further increasing the risk of aircraft to aircraft collision.

Improved and more cost-effective methods and systems for determining and identifying the positions of aircraft relative to each other so as to reduce the risk of aircraft collisions are therefore required.

Thus according to one aspect of the present invention there is provided a method for communicating aircraft position data comprising the steps of providing a first aircraft with a first aircraft wireless communication device operable to receive first aircraft position data, transmitting the first aircraft position data from the first aircraft wireless communication device to a central server via a mobile cell tower, selectively transmitting second aircraft position data from the central server to the first aircraft wireless communication device via a mobile cell tower, and alerting the first aircraft to the position of the second aircraft if the second aircraft position is within a pre-determined range of the first aircraft position.

According to another aspect of the present invention there is provided an aircraft position communication system comprising a wireless communication device and a central server, the wireless communication device is operable to receive aircraft position data associated with a first aircraft from a global positioning system and transmit the aircraft position data to the central server via a mobile phone cell tower, and the central server is operable to store and process the aircraft position data transmitted from the wireless communication device and aircraft position data associated with a second aircraft, in which the central server is further operable to selectively transmit the aircraft position data associated with the second aircraft to the wireless communication device via a mobile cell tower, and alert the first aircraft to the position of the second aircraft if the second aircraft position is within a pre-determined range of the first aircraft position.

The applicant has realised that pilots of aircraft are highly likely to be carrying a wireless communication device such as a mobile phone, and that the mobile phone, together with the existing digital cellular network of mobile cell towers can be utilised to communicate position data from any aircraft with the mobile phone on board, process that position data, and then transmit that position data to the aircraft via the mobile cell tower and the central server so a pilot of that aircraft can be alerted to the position of nearby aircraft within a pre-determined range. The alert can be presented visually on the screen of the wireless communication device, and/or via an audio output of the wireless communication device which can optionally be connected to the aircraft intercom.

The likelihood of a collision with nearby aircraft based on the bearing of the aircraft can also be determined from the position data, and the pilot can be alerted with a set of audio and/or visual alerts that are dependent on the likelihood of collision. By way of example, no likelihood of a collision with another aircraft could be indicated by a green aircraft icon on the display, a possible collision by a yellow aircraft icon, and an imminent or likely collision by a red aircraft icon, together with audio alerts describing the likelihood of the collision.

The invention will now be described by way of example only with reference to the accompany drawings, in which:
Figure 1 is a front schematic view of a wireless communication device for use with the method and system of the present invention,
Figure 2 is a schematic view of the system of the present invention in use with a mobile cell tower of a digital cellular network,
Figure 3 is a schematic view of the system of the present invention in use with the mobile cell tower of a digital cellular network of Figure 2 and a first and second aircraft having the wireless communication device on board,
Figure 4 is screen shot of the screen of the wireless communication device of Figure 1 with an identified aircraft at a green level of collision threat,
Figure 5 is screen shot of the of the screen of the wireless communication device of Figure 1 with an identified aircraft at a yellow level of collision threat,
Figure 6 is screen shot of the of the screen of the wireless communication device of Figure 1 with an identified aircraft at a red level of collision threat, and
Figure 7 is schematic view of the system of Figure 3 with associated ancillary interactions.

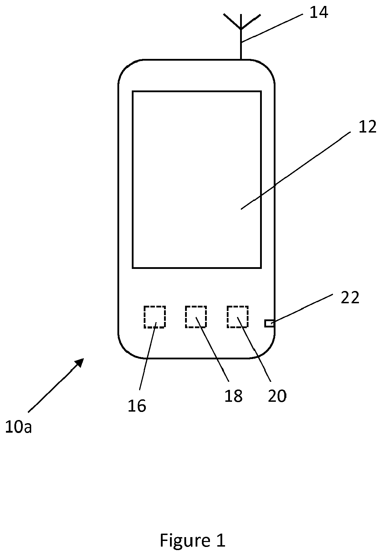

In Figure 1, a wireless communication device in the form of a mobile phone 10a is shown. The mobile phone 10a includes a screen 12 for displaying information to a user, for example a pilot (not shown) of an aircraft (not shown in Figure 1). The mobile phone 10a includes an antenna 14 which can transmit and receive data using a digital cellular network, for example, GSM, GPRS, 2G, 3G, or 4G protocols.

The mobile phone 10a also includes in an internal processor 16, and integrated Bluetooth® transceiver 18, an integrated GPS receiver 20, and an audio output 22. The GPS receiver identifies the position, that is, the latitude and longitude, and optionally the altitude of the mobile phone 10a, and therefore any aircraft in which the mobile phone 10a is located. Alternatively, the GPS receiver can be a separate stand-alone unit which can transmit the position of the aircraft to the mobile phone wirelessly, for example using the integrated Bluetooth® transceiver, or via a wired data connection. The GPS receiver can also be integrated within the avionics of the aircraft and communicate with the mobile phone wirelessly or via a wired data connection.

The mobile phone 10a also includes installed software with an algorithm configured to process aircraft position data as will be described below, and determine if other aircraft are within range of the aircraft equipped with the mobile phone 10a, and the likelihood of a collision with that aircraft. The algorithm ensures an appropriate audio or visual alert is given according to the likelihood of a collision. The software enables range parameters to be set, that is, the horizontal and/or vertical distances within which other aircraft are will be identified and presented to the pilot. A typical horizontal distance would be between one and six miles. A typical vertical, or altitude distance would be between 100 and 6000 feet.

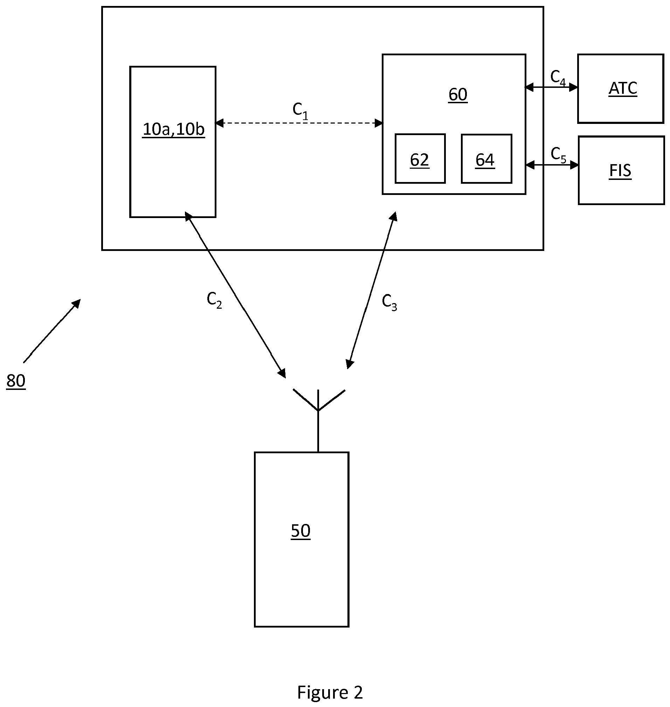

In Figure 2, an aircraft position communication system 80 used in conjunction with multiple aircraft, in this example, a first aircraft 70a and a second aircraft 70b, comprises the first mobile phone 10a which is used by the pilot of the first aircraft 70a, a second mobile phone 10b which is used by a pilot of the second aircraft 70b, and a central server 60. A dotted communication line C₁ is shown to illustrate the indirect communication between mobile phones 10a,10b and the central server 60. The communication between mobile phones 10a, 10b and the central server 60 comprises a direct mobile data communication C₂ between mobile phones 10a,10b and the cell tower 50, and a direct WAN data communication C₃ between the cell tower 50 and the central server 60.

In Figure 2, a single central server 50 is shown. In practice, multiple central servers would be used to provide redundancy in case one or more of the central servers fail.

Each central server 50 comprises an associated database 62 for storing aircraft position data from multiple aircraft position sources as will be described below, and a central processor 64 for processing the aircraft position data. The central server 50 includes a data connection with other flight information and position service as will be described below.

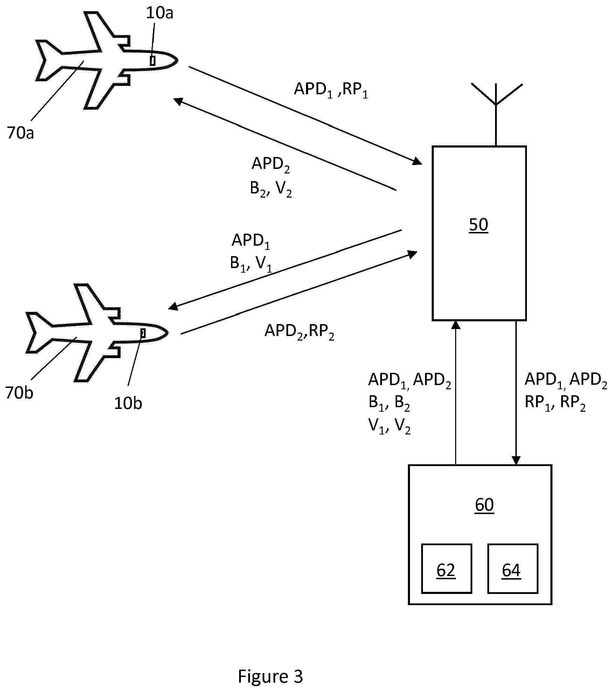

With reference to Figure 3 to 6, the method for communicating aircraft position data is as follows:
The pilot of the first aircraft 70a activates the software installed on the first mobile phone 10a such that it can transmit and receive radio signals to and from the central server 60 via the mobile phone cell towers 50 using the direct mobile data communication C₂ and the direct WAN data communication C₃.

The GPS receiver 14 identifies the longitudinal and lateral position of the first aircraft 70a.

The altitude of the first aircraft 70a is determined from the GPS receiver 20, or if fitted, the aircraft barometer (not shown).

The range parameters RP₁ for the first aircraft 70a are set as required by the first aircraft pilot, in this example, a 2-mile radius from the current first aircraft latitude and longitude position, and an altitude of between 100 and 2500 feet. The range parameters RP₁ can be inputted by touching an icon on the display, keyboard input, or by voice control. Typically, the pilot will set the radius so as to reduce the clutter of aircraft on the screen.

The position, altitude, range parameters and other data (for example the International Civil Aviation Organization (ICAO) reference for the first aircraft 70a, and the first aircraft call sign) are then broadcast as a data package comprising an initial first aircraft position data package APD₁ corresponding to the position and altitude at that moment in time and the range parameters RP₁ using the wireless transceiver 22 of the first mobile phone 10a. Included within the broadcast data package is a request that the central processor 60 interrogates the database 62 to identify other aircraft within the sent range parameters as will be described below.

Repeated first aircraft data packages are then broadcast over time at pre-determined time intervals, for example, one second, after the initial data package, to provide updated position and altitude data of the first aircraft 70a. If the range parameters RP₁ are changed, then the new range parameters are also broadcast to enable the central processor 64 to determine if the second aircraft 70b falls within the range parameters. It will be appreciated that the time interval between data broadcasts can be set as required but is typically one to two seconds, although the time interval can be configured such that data is only sent when GPS position data is received, thereby preventing data packages being broadcast without any current GPS position data.

The series of broadcasted data packages APD₁,RP₁ over time from the first aircraft 70a are received by the central server 60 via the mobile data connection C₂ between the mobile phone 10a and the mobile phone cell towers 50, and the WAN connection C₃ between the mobile phone cell towers 50 and the central server 60.

Other aircraft equipped with mobile phones running the above described software, in this example, the second aircraft 70b with the second mobile phone 10b on board, will also be broadcasting second aircraft data packages APD₂,RP₂ in the same way as the first aircraft 70a, such that the central server 60 receives the second aircraft position data package APD₂ and the range parameters RP₂ and identification data for the second aircraft 70b.

The central server 60 stores the first 70a and second 70b aircraft position data APD₁, APD₂, and the range parameters RP₁,RP₂ on the central database 62 such that they can be utilised by the central processor 64 as described below.

The central processor 64 then calculates the bearing B₁,B₂ and velocity V₁,V₂ of the first 70a and second 70b aircraft based on the latitude and longitude change over the time interval. The bearing and velocity data can also be obtained directly from the aircraft avionics by a wired or wireless connection.

The central processor 64 compares the position of the first aircraft 70a with the position of the second aircraft 70b, and if the second aircraft 70b is within the range parameters RP₁ of the first aircraft 70a, i.e. within 2 miles and between 100 and 2500 feet, then the second aircraft position data APD₂ is transmitted (via the mobile cell tower 50) to the first aircraft 70a, together with the calculated bearing B₂ and velocity V₂ of the second aircraft 70b. Similarly, if the first aircraft 70a is within the range parameters RP₂ of the second aircraft 70b, i.e. within 2 miles and between 100 and 2500 feet, then the first aircraft position data APD₁ is transmitted (via the mobile cell tower 50) to the second aircraft 70b, together with the calculated bearing B₁ and velocity V₁ of the second aircraft 70a.

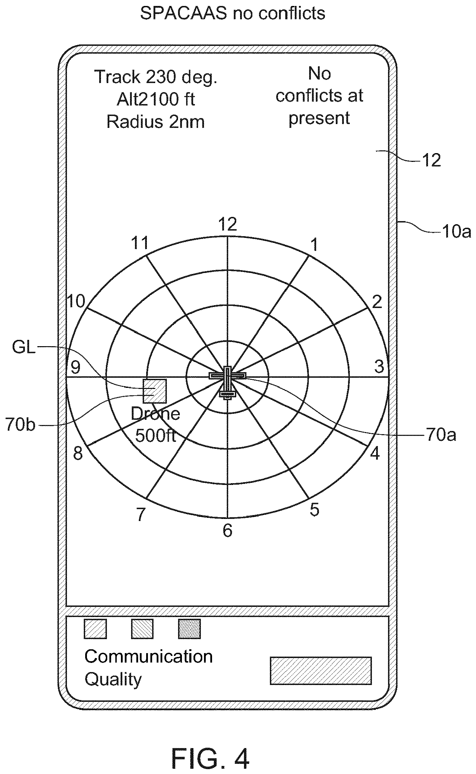

Once received, the position, bearing, velocity and aircraft identification of the second aircraft 70b is displayed on the screen 12 of the first mobile phone 10a (Figure 4), and the position, bearing, velocity and aircraft identification of the first aircraft 70a is displayed on the screen 12 of the second mobile phone 10b (not shown). An audio alert is also given, in this example "Traffic alert between 8 and 9 o'clock".

Based on the bearings B₁,B₂, an extrapolated flight path for each aircraft 70a,70b is calculated and the likelihood of a collision between the two aircraft is determined. The extrapolated flight path can be calculated by the central processor 64 or by the phone processor 16.

The likelihood of a collision can be set at different levels, in this example, a green level (no collision likely), a yellow level (possible collision), and a red level (collision likely). The likelihood of a collision is based on the extrapolated flight path and optionally the velocity of each aircraft.

On the screen of Figure 4, the second aircraft 70b is within range of the first aircraft, hence it is indicated on the screen 12, but the calculated flight path of each aircraft is such that the first aircraft 70a and the second aircraft 70b will not intersect. Accordingly, the green level (GL) is indicated.

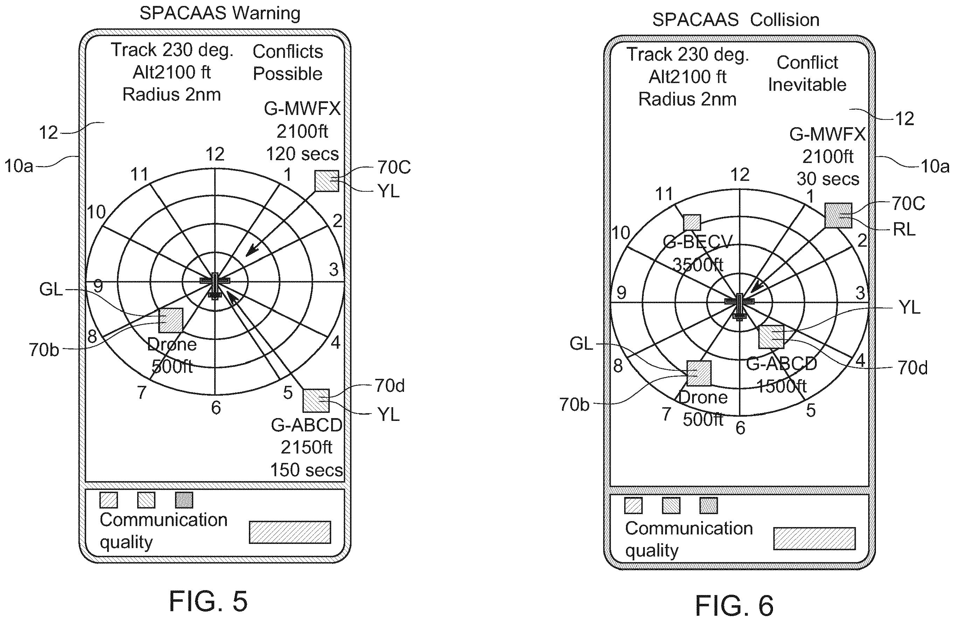

On the screen of Figure 5, two additional aircraft 70c,70d are within range of the first aircraft 70a, hence they are both indicated on the screen 12, together with the second aircraft 70b described above. The calculated flight path of both aircraft 70c,70d is such that their extrapolated flight paths will come within a pre-determined intersection distance, in this example, 1 mile) of intersecting with the first aircraft 70a. and the second aircraft 70b will not intersect. Accordingly, the yellow level (YL) is indicated, and an audio alert is also given, in this example the audio alert would be "Traffic alert between 1 and 2 o'clock, collision possible", and "Traffic alert between 4 and 5 o' clock, collision possible".

On the screen of Figure 6, the likelihood of collision of aircraft 70c with the first aircraft 70a has been raised to the red level (RL), indicating a collision is likely, and an audio alert is also given, in this example the audio alert would be "Traffic alert between 1 and 2 o' clock, collision likely". The pre-determined intersection distance associated with the red level can be set as required, in this example, the intersection distance is set at zero, i.e. aircraft 70c and 70a are on a direct collision course. It can also be seen on the screen of Figure 6 that aircraft 70d is maintained at the yellow level, i.e. it has not changed course.

In addition to determining the likelihood of collision, and therefore the appropriate alert level based on the extrapolated flight paths, the velocity of any aircraft within range of the first aircraft can also be taken into account. For example, if two aircraft on the same bearing, the aircraft with the higher velocity may be considered more of a threat, and the collision level can be set accordingly. It will be understood the collision levels can be set as required, and need not be limited to three levels, or to coloured green yellow, and red levels. For example, a numbered system could be used. The key requirement is that the alert level is communicated clearly to the pilot.

Optionally, visual and or audio alerts of identified aircraft can be given, together with any other data such as the aircraft velocity, or if the aircraft is climbing, descending, or in level flight so as to assist the pilot in determining any possible avoiding action to take. The audio alerts from the phone can also be directed to the aircraft intercom via the audio output 22, or by wireless communication.

It will be understood that the method and system of the present invention is not limited to a first and a second aircraft. By way of Example, Figures 5 and 6 show a screen 12 with three and four identified aircraft respectively in addition to the first or host aircraft 70a. The position of multiple aircraft is envisaged providing each of those aircraft are equipped with the mobile phone described above and transmitting data to and from the central server via the mobile phone cell towers or position data associated with those aircraft is stored in the database 62 of the central server 60. This position data can be made available to the database 62 by a wireless or wired communication C₄,C₅ with other flight position data systems, such as, for example, ATC/FIS aircraft position data obtained using alternative detection technologies such as ADS-B. his has the advantage that detection of aircraft within range of the first aircraft, and possible collision, is not limited to aircraft carrying suitable equipped mobile phones. However, as already described above, the limitation of alternative technologies such as ADS-B would still exist.

In addition to storing position data of aircraft, the central server 60 can also be connected to other flight information data services, such as services providing weather or map data.

It will be appreciated that by virtue of the central server 60 being in communication with ATC and FIS, the mobile phone on board the aircraft is also in communication with ATC and FIS thereby enabling communication between ATC and the aircraft via the central server 60 and mobile phone cell tower 50. This enables, for example, alerts or Automatic Terminal Information Service (ATIS) information indicating any threats to the aircraft, or other joining information relating to an airfield to be sent to, and displayed on the screen of, the mobile phone. The pilot can acknowledge any information sent by touching appropriate icons on the screen, for example, confirming the threat has been seen, or confirming the request to join a landing approach to an airfield, without the need for voice contact with ATC at the airfield. Icons can also be included on the screen of the mobile phone to identify an airfield by its ICAO code. Touching that icon can enable direct voice or text communication with that airfield, or send instructions to that airfield.

In addition to both ATC and FIS having visibility of mobile phone equipped aircraft, and vice versa, additional information can be made available, for example, the mobile phone telephone number, enabling direct voice and/or text messaging contact between ATC/FIS and the pilot of the aircraft. The direct voice contact is particularly advantageous as it provides an alternative to direct voice communications via radio.

It will also be understood that the mobile phone can be used to relay emergency signals, such as PAN PAN or MAYDAY to ATC/FIS, and that icons can be included on the screen accordingly, for example, to indicate a medical, aircraft fault, fire, or unlawful emergency.

The above system and method also enables aircraft equipped with mobile phones to identify each other, and if required, enable direct voice and text messaging contact between those mobile phone equipped aircraft. The screen on the mobile phone could include an option to touch one of the other visible aircraft to open voice or text communication. The text communication could be pre-set, for example, "change heading", and the communication could be accompanied with an equivalent voice alert. In an alternative, VOIP technology is also envisaged to enable communication. The mobile phone can also interface with other navigational software, for example SkyDemon for more detailed navigation assistance and interaction with the aircraft position data.

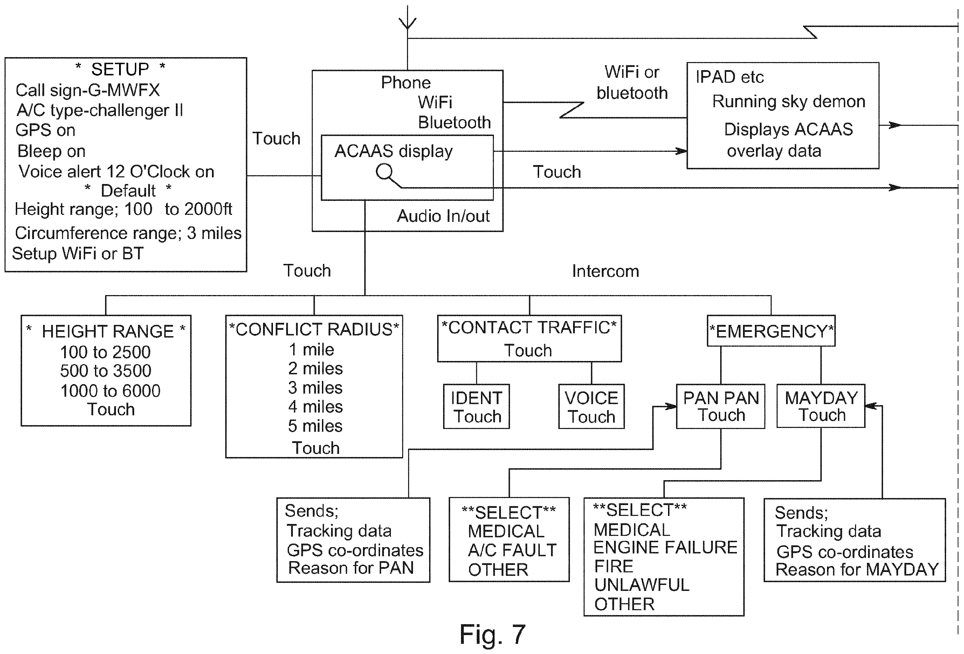

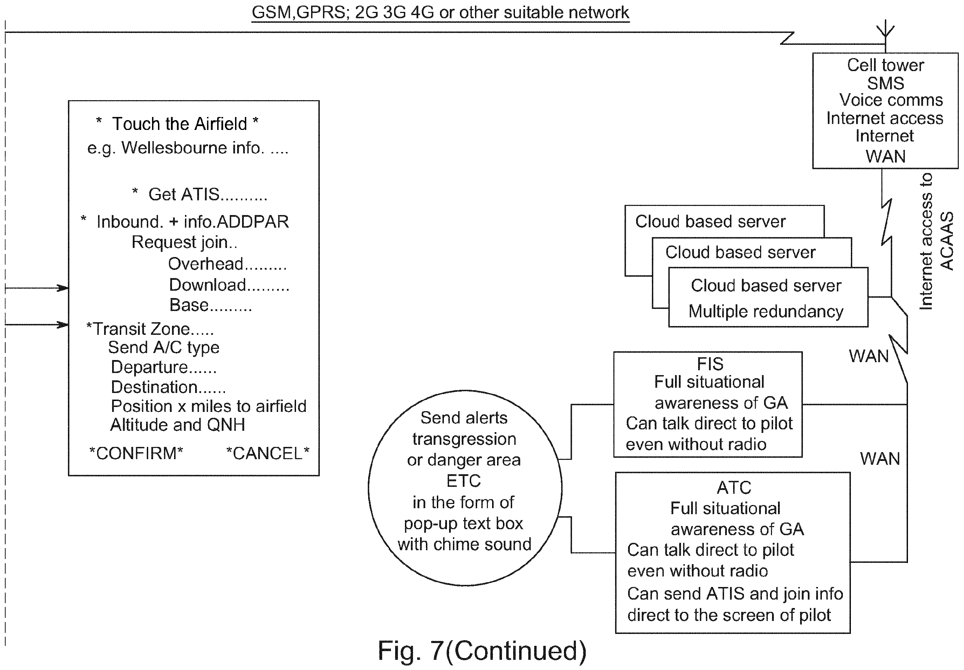

Figure 7 illustrates how the system of the present invention interacts with external devices and sources of flight data.

The mobile phone can also include safety features to prevent the sending of erroneous position data. For example, if the GPS derived altitude is significantly different from the last obtained altitude, then no altitude position data is sent until the GPS derived altitude appears more realistic based on the previous altitude. Where a barometric altitude is determined, that will always be sent in preference to a GPS derived altitude. In both cases, the altitude is identified as either barometer or GPS derived. The true altitude, i.e. that measured by the aircraft barometer can also be used to verify any GPS obtained altitude.

In the embodiments described above, the processing of the aircraft position data, that is the processing to determine if aircraft are within range, and the likelihood of a collision, is conducted by the central processor. In an alternative embodiment, the processing can be conducted by the processor of the mobile phone, or alternatively by a combination of the central processor and the processor of the mobile phone

The mobile phone can be configured such that it enters a 'sleep mode' for example, dimming the screen, and wakes up when aircraft are identified within range, or if a possible/likely collision is detected.

Once the aircraft has landed, or has a velocity of below 20 knots for example, the mobile phone can be configured to stop broadcasting its own position data, and hence receiving the position data of other aircraft.

The wireless communication device can also be sufficiently small so that it can be incorporated into an unmanned aircraft such as a drone. The drone can have integrated GPS which communicates with the device, or the device can have integrated GPS. By providing the drone with the wireless communication device, the drone can transmit position data so that it is visible to other aircraft and ATC. The drone pilot can also have visibility of other aircraft relative to the drone position by using an additional wireless communication device (which may be integrated with a control device for the drone) which displays the drone position and other aircraft by virtue of the communication between the additional wireless communication device and the central server via the mobile cell tower network.

It will be understood that the method and system of the present invention enables the use of a mobile phone, in conjunction with the mobile cell tower network, to display position data of other suitably equipped aircraft, as well as aircraft visible to ATC/FIS systems via the connection between those systems and the central server.

In addition to displaying position data of other aircraft, the likelihood of a collision with other aircraft can also be determined based on extrapolated flight paths derived from position data over time, with appropriate alerts given to the pilot. It would also be possible to interface possible collisions with an enabled auto-pilot system to automatically avoid a collision.

It has also been described above that equipping aircraft with mobile phones, and indicating to other aircraft that the aircraft is so-equipped, enables direct voice or text communication between aircraft, as well as between aircraft and ATC.

## Claims

1. A method for communicating aircraft position data comprising the steps of:
a. providing a first aircraft with a first aircraft wireless communication device operable to receive first aircraft position data,
b. transmitting the first aircraft position data from the first aircraft wireless communication device to a central server via a mobile cell tower,
c. selectively transmitting second aircraft position data from the central server to the first aircraft wireless communication device via a mobile cell tower, and
d. alerting the first aircraft to the position of the second aircraft if the second aircraft position is within a pre-determined range of the first aircraft position.

2. A method for communicating aircraft position data according to claim 1 in which the second aircraft position data is obtained by providing a second aircraft with a second aircraft wireless communication device operable to receive second aircraft position data, and transmitting the second aircraft position data from the second aircraft wireless communication device to the central server via a mobile cell tower.

3. A method for communicating aircraft position data according to claim 1 in which the second aircraft position data is obtained from a secondary aircraft position system in communication with the central server.

4. A method for communicating aircraft position data according to claim 3 in which the secondary aircraft position system obtains data from the automatic dependent surveillance-broadcast (ADS-B) system.

5. A method according to any preceding claim further comprising the step of only transmitting the received second aircraft position data from the central server to the first aircraft wireless communication device via a mobile cell tower if the second aircraft position is within a pre-determined range of the first aircraft position.

6. A method according to any preceding claim further comprising the steps of transmitting a range parameter associated with the first aircraft to the central server, and determining if the location of the second aircraft is within the range parameter of the first aircraft using the range parameter of the first aircraft.

7. A method according to claim 6 further comprising the step of transmitting a request instruction from the first aircraft to instruct the central server to identify aircraft within the range parameter associated with the first aircraft.

8. A method according to claim 7 in which the range parameter includes vertical and/or horizontal distances.

9. A method according to any preceding claim in which the step of alerting the first aircraft to the position of the second aircraft comprises displaying the second aircraft position data relative to the first aircraft position data on a screen of the first aircraft wireless communication mobile device if the second aircraft position is within a pre-determined range of the first aircraft.

10. A method according to any preceding claim in which the step of alerting the first aircraft to the position of the second aircraft comprises outputting an audio alert on the first aircraft wireless communication device.

11. A method according to any preceding claim in which a bearing and/or velocity of the first and second aircraft is determined from the first and second aircraft position data transmitted over a period of time.

12. A method according to claim 11 further comprising the step of calculating an extrapolated flight path for each of the first and second aircraft based on the bearing of the first and second aircraft, and determining if the extrapolated flight paths intersect within a pre-determined intersection distance.

13. A method according to claim 12 further comprising the step of alerting the first aircraft to the position of the second aircraft, the level of alerting being determined by the proximity of the extrapolated flight paths to the pre-determined intersection distance.

14. A method according to any preceding claim in which the position data includes latitude and longitude data and/or altitude data.

15. A method according any preceding claim in which the position data is global positioning system (GPS) data.

16. A method according to claim 15 when dependent on claim 14 in which the altitude data is obtained from the GPS data or from a barometer.

17. A method according to claim 16 in which the wireless communication device identifies if the altitude data is obtained from the barometer or GPS data.

18. A method according to any preceding claim further comprising the step of transmitting aircraft identification data with the aircraft position data.

19. An aircraft position communication system comprising a wireless communication device and a central server, the wireless communication device is operable to receive aircraft position data associated with a first aircraft from a global positioning system and transmit the aircraft position data to the central server via a mobile phone cell tower, and the central server is operable to store and process the aircraft position data transmitted from the wireless communication device and aircraft position data associated with a second aircraft, in which the central server is further operable to selectively transmit the aircraft position data associated with the second aircraft to the wireless communication device via a mobile cell tower, and alert the first aircraft to the position of the second aircraft if the second aircraft position is within a pre-determined range of the first aircraft position.

20. An aircraft position communication system according to claim 19 or a method for communicating aircraft position data according to any one of claims 1 to 18, in which the wireless communication device is a mobile phone.
